# EUROPEAN PATENT APPLICATION

(11) **EP 1 998 499 A1**
(43) Date of publication of application: **03.12.2008**
(21) Application number: 07010808.9
(22) Date of filing: 31.05.2007
(51) Int. Cl.: H04L 12/28, H04Q 7/38

(54) **Polling for peer-to-peer traffic**

(71) Applicant: Nokia Siemens Networks Oy, 02610 Espoo (FI)
(72) Inventor: Lott, Matthias, 82152 Planegg (DE)
(74) Representative: Weidel, Gottfried

(57) **Abstract**

The present invention relates to wireless communication systems and in particular to peer-to-peer communications in wireless communication systems having central instances for medium resource allocation management.

A probe message is sent from a first station to a second, remote station over a direct communication link, which makes use of network medium resources allocated by a central instance, which exercises control over shared communication medium resources of a wireless local area network and allocates medium resources to stations including at least the first station assigned to the central instance. A response message is received at the first station in response to the probe message. The response message includes information about link quality, which is determined at the second, remote station on the basis of physical layer measurements at the probe message. A direct communication link is established between the first station and the second, remote station. The direct communication link makes use of network medium resources allocated by the central instance. communication parameters of the direct communication link are selected in accordance with the link quality information. Data is then transmitted from the first station to the second, remote station through the direct communication link.

## Description

The present invention relates to wireless communication systems and in particular to peer-to-peer communications in wireless communication systems having central instances for Medium resource allocation management.

Medium resource allocation in wireless communication systems is typically controlled by the means of a central instance, which is called for instance base station (e.g. in GSM standard), NodeB (in the 2^{nd} and 3^{rd} generation telecommunication systems including for instance code division multiple access systems (CDMA) or wide-band code division multiple access systems (WCDMA) like UMTS (universal mobile telecommunications system)) or central controller/access point (in case of IEEE 802.x, WiFi, WiMAX or related standards). In these systems, communication may take place between mobile stations (MS) / mobile terminals (MT), which are in particular located in nearby proximity. In this case, nearby proximity means that the stations are spaced apart at a distance within the transmission range of the built-in wireless communication interface. In such cases, peer-to-peer communication (i.e. direct communication between stations in nearby proximity) is in principle operable. In future, it is expected that direct (peer-to-peer) communications will gain more relevance due to user demands for exchanging huge amounts of data (e.g. multimedia data) between stations. Hence, peer-to-peer communications will become more important in the development of new wireless communication systems and evolution of available wireless communication systems. Peer-to-peer communication is also designated as direct link and direct mode communication, respectively.

While there exist may approaches for estimating the link/channel conditions between the central instance (BS, NodeB, CC, AP, etc.) of a wireless communication system and a station (mobile station, mobile terminal, user equipment) the determination and/or estimation of link conditions between stations of a centrally resource managed wireless communication system is a challenge faced by developers in this technical field.

### [Summary of the Invention]

It is an object of the present invention to enable quality measurements for peer-to-peer communication in wireless communication networks, which medium resources allocation is managed by one or more central instances.

In particular it is an object of the present invention to enable the quality measurements performed directly between the stations, between which peer-to-peer communication should be established.

More particularly, it is an object of the present invention to enable the station, at which the peer-to-peer communication originates, to determine with which station peer-to-peer communication should be established.

According to an aspect of the present invention, a method is provided. A probe message is sent from a first station to a second, remote station over a direct communication link, which makes use of network medium resources allocated by a central instance. The central instance exercises control over shared communication medium resources of a wireless local area network. The least the first station is assigned to the central instance. A response message is received at the first station in response to the probe message. The response message includes information about link quality. The link quality information is determined at the second, remote station on the basis of physical layer measurements at the probe message. A direct communication link is established between the first station and the second, remote station. The direct communication link makes use of network medium resources allocated by the central instance. communication parameters of the direct communication link (DiL) are selected in accordance with the link quality information. Data is transmitted from the first station to the second, remote station through the direct communication link.

According to an embodiment of the present invention, the procedure of establishing the direct communication link is cancelled in case the link quality is not satisfactory. The data is sent to be transmitted to the second, remote station to the central instance, through which the data is relayed and passed on to the second, remote station.

According to an embodiment of the present invention, a polling message is received from the central instance. The polling message includes allocation information for the direct communication link, through which the probe message is sent to the second, remote station.

According to an embodiment of the present invention, a polling message is received at the first station from the central instance. The polling message indicates a taking over of the data communication task of the first station in that the data to be transmitted to the second, remote station is relayed through the central instance and passed on to the second, remote station. The central instance (CI) listens on the communication between first and second, remote stations.

According to a further aspect of the present invention, a method is provided. A probe message is sent from a first station to a second, remote station. The probe message is sent over a direct communication link, which makes use of network medium resources allocated by a central instance. The central instance exercises control over shared communication medium resources of a wireless local area network. At least the first station is assigned to the central instance. The probe message is received at the second, remote station. The second, remote station determines link quality information on the basis of physical layer measurements at the probe message. A response message is sent back from the second, remote station to the first station in response to the reception of the probe message. The response message includes the link quality information. The response message is received at the first station and a direct communication link is established between the first station and the second, remote station. The direct communication link makes use of network medium resources allocated by the central instance and communication parameters of the direct communication link are selected from a plurality thereof in accordance with the link quality. Data is transmitted from the first station to the second, remote station through the direct communication link.

According to an embodiment of the present invention, the procedure of establishing the direct communication link is cancelled in case the link quality is not satisfactory. The data to be transmitted to the second, remote station is sent to the central instance, through which the data is relayed and passed on to the second, remote station.

According to an embodiment of the present invention, a polling message is received from the central instance. The polling message includes allocation information for the direct communication link, through which the probe message is sent to the second, remote station.

According to an embodiment of the present invention, a polling message is received at the first station from the central instance. The polling message indicates a taking over of the data communication task of the first station in that the data to be transmitted to the second, remote station is relayed through the central instance and passed on to the second, remote station. The central instance (CI) listens on the communication between first and second, remote stations.

According to a further aspect of the present invention, a computer program product comprising program code sections stored on a computer-readable medium for carrying out any of the aforementioned methods, when the program code sections are run on a processing device.

According to a further aspect of the present invention, a computer program product comprising program code sections for carrying out any of the aforementioned methods, when the program code sections are run on a processing device.

According to a further aspect of the present invention, a station device is provided. The station device comprises a wireless communication network interface, which is adapted to send a probe message from a first station to a second, remote station. The probe message is sent over a direct communication link, which makes use of network medium resources allocated by a central instance. The central instance exercises control over shared communication medium resources of a wireless local area network. The at least the first station is assigned to the central instance. The wireless communication network interface is further adapted to receive a response message at the first station in response to the probe message. The response message includes link quality information. The link quality information is determined at the second, remote station on the basis of physical layer measurements at the probe message. The wireless communication network interface is still further adapted to establish a direct communication link between the first station and the second, remote station. The direct communication link makes use of network medium resources allocated by the central instance and communication parameters of the direct communication link are selected in accordance with the link quality information. The wireless communication network interface is yet further adapted to transmit data from the first station to the second, remote station through the direct communication link.

According to a further aspect of the present invention, a system is provided, which comprises one or more stations including at least a first station (STA1) and a central instance, which exercises control over shared communication medium resources of a wireless local area network. The at least the first station is assigned to the central instance. The first station comprises a wireless communication network interface, which is adapted to send a probe message from a first station to a second, remote station. The probe message is sent over a direct communication link, which makes use of network medium resources allocated by the central instance. The wireless communication network interface of the first station is further adapted to receive a response message in response to the probe message. The response message includes link quality information. The wireless communication network interface is still further adapted to establish a direct communication link between the first station and the second, remote station. The direct communication link makes use of network medium resources allocated by the central instance and communication parameters of the direct communication link are selected in accordance with the link quality.

The second, remote station comprises a wireless communication network interface, which is adapted to receive the probe message and a physical (PHY) layer component, which is adapted to determine the link quality on the basis of physical layer measurements at the probe message. The wireless communication network interface of the second, remote station is further adapted to send the response message to the first station.

### [Brief Description of the Drawings]

These and other additional objects and features of the present invention will become readily apparent when the same are set forth in greater detail in the accompanying detailed description of the embodiments with reference being made to the drawings in which like reference numerals represent like or similar parts throughout and in which:
- Figs. 1a to 1d: depict schematic block diagrams illus-trating network topologies of wireless net-works;
- Figs. 2a and 2b: depict schematic block diagrams of exem-plary frame structures;
- Figs. 3a to 3c: depict wireless communication network im-plementations and message exchange proce-dures according to embodiments of the pre-sent invention;
- Fig. 4: depicts schematically a flow diagram illus-trating operations carried out at the net-work nodes according to an embodiment of the present invention; and
- Figs. 5a and 5b: depict a block diagram illustrating com-ponents of a wireless communication network interface module and an access point ac-cording to an embodiment of the present in-vention.

### [Detailed Description of the Invention]

The following embodiments are described in sufficient detail to enable those skilled in the art to practice the invention, and it is to be understood that the embodiments may be combined, or that other embodiments may be utilized and that structural, logical, and electrical changes may be made without departing from the spirit and scope of the present invention. It should be noted that references to "an", "one", or "various" embodiments in this document are not necessarily to the same embodiment, and such references contemplate more than one embodiment.

This document discusses, among other things, wireless communication systems and data communication protocol framework thereof. The data communication protocol framework in particular relates to medium resource allocation management to schedule data communications between stations of such wireless communication systems, which medium resources allocation is managed by one or more central instances. Such central instances exercises control over the medium resources provided by the wireless communication system for data communication with stations assigned to the central instances. Each central instance controls the medium resource allocation within a predefined geographical area, i.e. a so-called cell, and allocated medium resources to stations of the wireless communication system, which are located within the geographical area or cell.

For the sake of explanation and illustration, wireless communication systems according to HiperLAN/2 standard and IEEE 802.11x standard will be discussed in more detail. However, it should be understood that these standard represent merely examples of a general type of a wireless communication system addressed by the basic concept of the present invention. The core concept of the present invention suggests the use of a wireless communication system as defined above in general.

### [HiperLAN type 2]

HiperLAN/2 is a wireless LAN (local area network) system standardized for the 5.2 GHz range. The original development of HiperLAN/2 mostly aimed at low mobility scenarios and includes at the moment modulation types of up to 54 Mbit/s. HiperLAN/2 is one system of a category of systems covered by the Broadband Radio Access (BRAN) project of the ETSI (European Telecommunications Standardization Institute) including HiperLAN/1, HiperLAN/2, HiperAccess (an outdoor variant) and HiperLink (for static interconnections for instance to interconnect HiperLAN access points and/or HiperAccess networks)

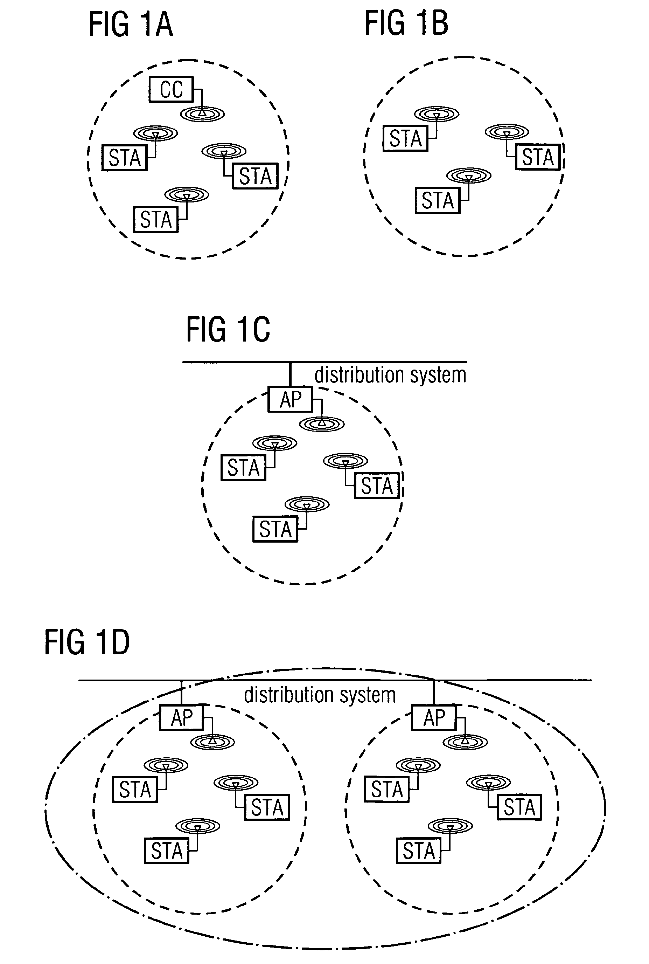

The primary goal of the HiperLAN/2 standard is to maximize the utilization of the radio frequency resources. The main mechanism, which represents the largest difference to IEEE 802.x and in particular IEEE 802.11x wireless LAN system standards, is the use of an "a priori" scheduled medium access, i.e. an "a priori" scheduled access to the radio frequency resources. This means that among a set of stations (STAs), one station (STA) is declared to be the central controller (CC), which controls the radio frequency resources within a coverage area also called as cell. Any station (STA) that wants to communicate with another station (STA) has to announce this to the central controller (CC), which will grant time slots in a periodically repeated frame to this station (STA), i.e. the central controller (CC) manages the allocation of radio frequency resources, which are shared among stations (STAs) for communication data in the central controller (CC) served cell. Hence, HiperLAN/2 uses a connection-oriented, centrally scheduled time division multiple access (TDMA) technique to organize the medium access. Fig. 1a depicts a schematic block of a network illustrating by the way of example a network environment including a central controller (CC).

Main benefits are collision-free data traffic (100% efficiency, no hidden or exposed terminal problems) and simple support for priorities or QoS (quality of service) requirements.

### [HiperLAN/2 Network topology]

Form functional point of view, a HiperLAN/2 system typically comprises two types of stations (STAs), mobile stations (STAs) and central controller (CC). A central controller (CC), which provides access to any other network infrastructure such as a LAN or the Internet, is typically called access point (AP).

A mobile station (MS) may be also designates as mobile terminal (MT) or user equipment (UE). In general, it should be noted that the term "mobile" as used throughout herein and the technical field of the invention should not be understood in the sense of limited to "portable". Any electronic device including portable stations, desktop stations and the like may make use of wireless data communication through a wireless communication network system such as a HiperLAN/2 system, an IEEE 802.x system and the like. The terms "mobile station (MS)", "mobile terminal (MT)" or "user equipment (UE)" might be understood as a device or terminal enabled for wireless communications, which in principle allows for mobility of the station (STA) during communication in comparison with traditional wire-based communication technologies.

A HiperLAN/2 network environment may typically comprise a number of access points (APs) each of which covers a certain geographic area, i.e. a cell. Fig. 1c depicts a schematic block of a network illustrating by the way of example a network environment including an access point (AP). Together the access points (APs) interconnected for instance through an Ethernet backbone from a radio access network (RAN) with full or partial coverage of an area of almost any size. The coverage areas (i.e. cells) may or may not overlap each other, thus simplifying roaming of mobile terminals (MTs) inside the radio access network (RAN). Each access point (AP) serves a number of mobile terminals (MTs), which have to be associated to the access pint (AP). This HiperLAN/2 network environment comprising several access points allowing for roaming of mobile terminals (MTs) inside the radio access network (RAN) may be understood as a cellular radio access network configuration.

An alternative HiperLAN/2 network environment can be operated as an adhoc wireless LAN, which can be put into operation with without extensive configuration at minimum parameterization. This alternative HiperLAN/2 network environment has been originally intended for home environments. The alternatives environments share the same basic features by defining the following equivalence between both systems: a subnet in the adhoc LAN configuration is functionally equivalent to a cell in the cellular access network configuration; a central controller (CC) in the adhoc LAN configuration is equivalent to the access point (AP) in the cellular access network configuration. However, the central controller (CC) may be dynamically selected from any station (STA) of the HIPERLAN/2 network environment, and may be handed over to another station (STA), for example when the previous one leaves the network; multiple subnets in a adhoc LAN configuration are made possible by having multiple central controllers (CCs) operating at different frequencies.

A HiperLAN/2 standard defines two basic modes of operation:
Centralized mode (CM): In this mode, an access point (AP) is connected to a core network (backbone network infrastructure), which serves the stations (STA_{S}) associated to the access point (AP). All traffic passes the access point (AP), regardless of whether the data exchange is between a station (STA) and a station (STA) elsewhere in the core network or between stations (STAs) associated to this access point (AP). The basic assumption is that a major share of the traffic is exchanged with terminals elsewhere in the network.
Direct mode (DM): In this mode, the medium access (i.e. the radio frequency resources) is still managed in a centralized manner by a central controller (CC). However, user data traffic may exchanged between terminals without going through the central controller (CC). It is expected that in some applications (especially, in home network environment), a large portion of user data traffic is directly exchanged between stations (STAs) associated with a single central controller (CC), which means that data rate is roughly two times better than if the central controller (CC) would have relayed the data traffic.

A Central Controller may also be connected to a core network and, thus, may be able to operate in both direct mode (DM) and centralized mode (CM).

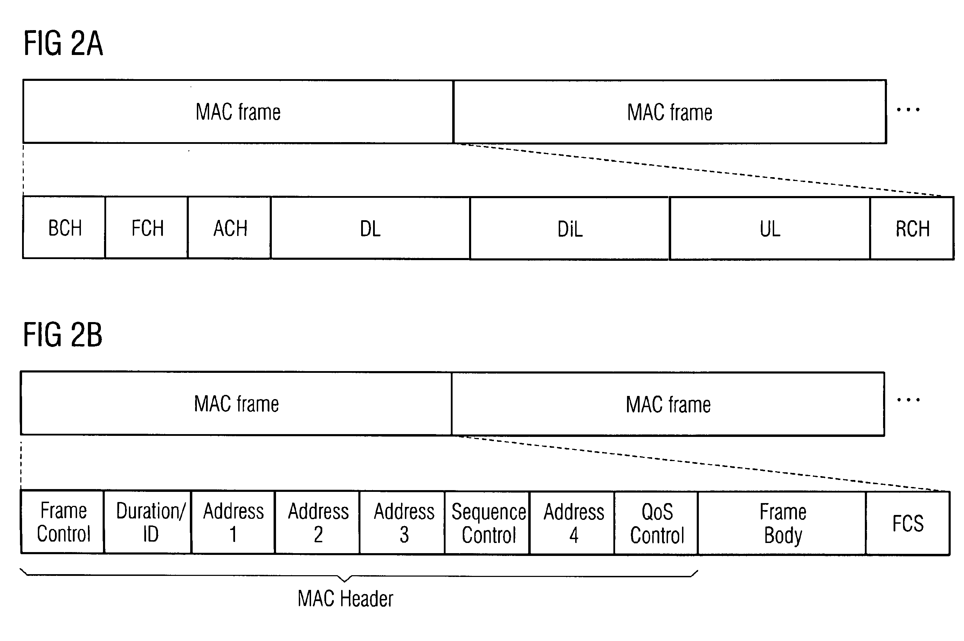

The medium access control (MAC) is a centrally scheduled TDMA/TDD (time division multiple access / time division duplex) scheme on the basis of a frame, which is divided into different phases (refer to Fig. 2a for the sake of illustration), which are again divided into cells of fixed length. In the first phase, the central controller (CC) or access point (AP) broadcasts administrative information (broadcast channel, BCH and frame control channel, FCH), in particular, which station (STA) is allowed to transmit to whom at what time and for how long. The FCH (Frame Control Channel) is a directory located to the first part of every HiperLAN/2 MAC frame, which informs every station (STA) what is going to happen in that MAC frame. The FCH (Frame Control Channel) comprises slots, called Information Elements (IE), where each Information Elements (IE) is assigned to one particular transmission for one station (STA); wherein one transmission may contain many packets. One of the basic approaches in the HiperLAN/2 standard is that all stations (STAs) in the cell know about all the data transfers of the MAC frame after reading its Frame Control Channel (FCH). This is important, because in real life implementations stations (STAs) have to prepare themselves for high-speed data reception, transmission, etc. The last part of the first phase is the so-called ACH (access channel), which provides feedback to newly registering stations (STAs).

As this information is available to all terminals, channel access can be organized. The basic structure on the air interface generated by the MAC is shown in figure 2a. It comprises a sequence of MAC frames (frames of equal length with 2 ms duration). Each MAC frame comprises several phases:
Broadcast (BC) phase: The Broadcast (BC) phase carries the BCCH (broadcast control channel) and the FCCH (frame control channel). The BCCH (broadcast control channel) carries general announcements and some status bits announcing the appearance of more detailed broadcast information in the downlink phase (DL). The FCCH (frame control channel) carries the information about the structure of the ongoing frame, containing the exact position of all following emissions, their usage and content type. The messages in the FCCH (frame control channel) are called resource grants (RG).
Downlink (DL) phase: The downlink (DL) phase carries user specific control information and user data, transmitted from AP/CC (access point/central controller) to stations (STAs). Additionally, the DL phase may contain further broadcast information which does not fit in the fixed BCCH (broadcast control channel) field.
Uplink (UL) phase: The uplink (UL) phase carries control and user data from the stations (STAs) to the access point/central controller (AP/CC). The stations (STAs) have to request capacity for one of the following frames in order to get resources granted by the access point/central controller (AP/CC).
Direct Link (DiL) phase: The direct link (DiL) phase carries user data traffic between stations (STAs) without direct involvement of the access point/central controller (AP/CC). However, for control traffic, the access point/central controller (AP/CC) is indirectly involved by receiving Resource Requests from stations (STAs) for these connections and transmitting Resource Grants in the FCCH (frame control channel).
Random access (RA) phase: The Random access (RA) phase carriers a number of RCH (random access channels). Stations (STAs) to which no capacity has been allocated in the UL phase use this phase for the transmission of control information. Non-associated stations (STAs) use RCHs for the first contact with an access point/central controller (AP/CC). This phase is also used by stations (STAs) performing handover to have their connections switched over to a new access point/central controller (AP/CC).

It should be noted that the structure is slightly different when the access point/central controller (AP/CC) has a sectored antenna. The approach chosen when using sectored antenna distributes the available MAC frame duration over the sectors. In this case, each phase is repeated, in time, one for each sector. The use of DiL with sectored antenna is not specified up to now.

The flexibility of the HiperLAN/2 standard is in particular represented by the so-called direct link traffic. As it is possible for the access point/central controller (AP/CC) to assign the same time slot to one station (STA) as a sender, to another station (STA) as a receiver, stations (STAs) can communicate directly with each other without having to send the data via the access point/central controller (AP/CC). Usually, the sequence of transmissions is organized such that after the frame's initial administration phase (broadcast phase), downlink traffic is scheduled (downlink phase), then direct link traffic (direct link phase), and uplink traffic (uplink phase), wherein the order of these first four phases is chosen such that the number of send/receive turnarounds can be minimized. At the end of a frame, the fifth (and last) phase is the random access time interval (the medium access method is slotted ALOHA) where stations (STAs) can compete for channel access; it is used to setup associations between terminals and access point/central controller (AP/CC) and other infrequent, unscheduled requests.

On top of these basic mechanisms, a number of additional capabilities are included in the HiperLAN/2 standard (e.g., automatic frequency selection, multicast, automatic access point/central controller (AP/CC) selection, etc.). In the present context, the AP/CC's capability to request channel measurements from any station (STA), describing the channel characteristics between any station (STA) and the access point/central controller (AP/CC), is important. Such a "radio map" allows the access point/central controller (AP/CC) to decide how to schedule transmission and how relaying may be organized e.g., the access point/central controller (AP/CC) can learn whether a given station (STA) is "in between" itself and a third station (STA) as seen from the perspective of channel gains / channel conditions; i.e. real space physical location is not important). Other possible add-ons are sleep modes for mobile terminals or the interconnection of separate HiperLAN/2 cells.

However, the direct link implementation of HiperLAN/2 lacks an approach how to guarantee that both stations intended for communicating data within the direct link phase can communicate with each other because the channel/link conditions and/or reliable estimates of channel/link conditions between both stations are unknown.

### [WLAN IEEE 802.11x]

In 1997 the IEEE adopted IEEE Std. 802.11-1997, the first wireless LAN (WLAN) standard. This standard defines the media access control (MAC) and physical (PHY) layers for a LAN with wireless connectivity, which addresses local area networking in which wireless connected stations (which are also referred to as mobile terminals, mobile stations or user equipment as defined above) communicate over the air to other stations (STAs) or devices that are within proximity to each other, i.e. within the coverage area of the radio frequency interface enabling wireless communication.

The 802.11 architecture is comprised of several components and services that interact to provide terminal mobility.

The station (STA) is the most basic component of the wireless network. A station (STA) in the sense of the IEEE 802.11 standards is any terminal or device that comprises the functionality of the 802.11 protocol, that being media access control (MAC), physical layers (PHY), and a connection to the wireless media. Typically the 802.11 functions are implemented in the hardware and software of a network interface module or card (NIC).

A mobile terminal could be a laptop PC, handheld device, a cellular telephone, an Access Point or nay other electronic device equipped with a wireless network interface. Stations (STAs) may be mobile, portable, or stationary. All stations (STAs) of an IEEE 802.11 network support the 802.11 station services of authentication, de-authentication, privacy, and data delivery.

IEEE 802.11 standard defines different service sets:
Basic Service Set (BSS): The basic service set (BSS) represents the basic building block of an 802.11 wireless LAN. The basic service set (BSS) comprises a group of any number of stations (STAs). To understand principles of the basic service set (BSS) topology of the wireless local area network should be taken into consideration.
Independent Basic Service Set (IBSS): The most basic wireless LAN topology is a set of stations (STAs), which have recognized each other and are connected through the wireless media in a peer-to-peer fashion. This form of network topology is referred to as an independent basic service set (IBSS) or an adhoc network. In an independent basic service set (IBSS), the mobile stations (STAs) communicate directly with each other. Every station (STA) may not be able to communicate with every other station (STA) due to the range limitations. There are no relay functions in an independent basic service set (IBSS) therefore all stations (STAs) need to be within range of each other and communicate directly. Fig. 1b illustrates exemplarily a basic service set (BSS) topology as described briefly above.
Infrastructure Basic Service Set: An infrastructure basic service set is a basic service set (BSS) with a component called an access point (AP). The access point (AP) provides a local relay function for the basic service set (BSS). All stations (STAs) in the basic service set (BSS) communicate with the access point (AP) and no longer communicate directly. All frames are relayed between stations (STAs) by the access point (AP). This local relay function effectively doubles the range of the independent basic service set (IBSS). It should be noted that the infrastructure basic service set substantially corresponds to the centralized mode (CM) described above from a functional point of view. The access point (AP) may also provide connection to a distribution system or a backbone network infrastructure. Fig. 1c illustrates exemplarily a basic service set (BSS) topology as described briefly above.
Distribution System (DS) The distribution system (DS) is the means by which an access point (AP) communicates with another access point (AP) to exchange frames for stations (STAs) in their respective basic service set (BSSs), forward frames to follow stations (STAs) as they move from one basic service set (BSS) to another, and exchange frames with a backbone network infrastructure such as wired network, LAN and the like.
Extending coverage via an extended service set (ESS) 802.11 extends the range of mobility to an arbitrary range through the extended service set (ESS). An extended service set is a set of infrastructure basic service sets (BSSs), where the access points communicate amongst themselves to forward traffic from one BSS to another to facilitate movement of stations (STAs) between basic service sets (BSSs). Fig. 1d illustrates exemplarily a basic service set (BSS) topology as described briefly above.
The access point (AP) performs this communication through the distribution system. The distribution system is the backbone of the wireless LAN and may be constructed of either a wired LAN or wireless network.

IEEE 802.11 standard defines different access modes:
Distributed Coordination Function (DCF): The fundamental access method of 802.11 is a distributed coordination function (DCF) called carrier sense multiple access with collision avoidance (CSMA/CA). CSMA/CA works by a "listen before talk scheme". This means that a station wishing to transmit must first sense the radio channel to determine if another station is transmitting on this radio channel. If the medium is not busy, the transmission may proceed. The CSMA/CA protocol avoids collisions among stations sharing the medium by utilizing a random backoff time if the station's physical or logical sensing mechanism indicates a busy medium. The period of time immediately following a busy medium is the highest probability of collisions occurring, especially under high utilization. The CSMA/CA scheme implements a minimum time gap between frames from a given station. Once a frame has been sent from a given transmitting station, that station must wait until the time gap is up to try to transmit again. Once the time has passed, the station selects a random amount of time (the backoff interval) to wait before "listening" again to verify a clear channel on which to transmit. If the channel is still busy, another backoff interval is selected that is less than the first. This process is repeated until the waiting time approaches zero and the station is allowed to transmit. This type of multiple access ensures judicious channel sharing while avoiding collisions.
A four-way handshaking is specified with the CSMA/CA for communication between stations: an exchange of a request-to-send (RTS) and a clear-to-send (CTS) frame prior to the actual transmission of the data (DATA) frame and acknowledgement (ACK) frame. The RTS and CTS frames contain a Duration/ID field that defines the period of time that the medium is to be reserved to transmit the actual data frame and the returning acknowledgement (ACK) frame. All stations (STAs) within the reception range of either the originating station (STA transmitting the RTS) or the terminating station (STA which transmits the CTS) learn of the medium reservation.
Point Coordination Function (PCF): The IEEE 802.11 standard also defines an optional access method called point coordination function (PCF), which is usable on the infrastructure network configurations. This access method uses a point coordinator (PC), which operate at the access point (AP) of the basic service set (BSS) to determine which station (STA) currently has the right to transmit. The operation is essentially that of polling with the point coordinator (PC) performing the role of the polling master.
The point coordination function (PCF) pre-orders the air cell transmissions by means of a TDMA (time division multiple access) scheme. point coordination function (PCF) makes intensive use of control frames to control and order frame distribution between stations (substantially beacons and poll frames). Two distinct periods subsequently occur on the air medium when in point coordination function (PCF) mode: contention phase (similar to the distributed model (DM) where all stations "almost randomly" try to gain access on the air medium), then contention free phase managed by the point coordination function (PCF). All stations (STAs) have to notice the starting time of a contention free period in order to share a (distributed) global time reference and clock. Point coordination function (PCF) makes use of timing parameters to prioritize frame classes and to gain control of the medium.

However, with centrally coordinated transmission provided by the point coordination function (PCF) a direct link enabling direct transmission between stations is not considered. Rather, the distributed coordination function (DCF) as medium access modes is foreseen for direct link and in this access mode medium resource allocation is not controlled via any central instance.

Those skilled in the art will appreciate on the above explanation, that distributed coordination function (DCF) cannot guarantee any quality of service (QoS) requirements and the use of distributed coordination function (DCF) as access method does not allow for efficient medium resource allocation management.

According to an embodiment of the present invention, a wireless communication system of the type as described above is provided, which medium resources are managed and allocated by a central instance. In general, the medium resources of the wireless communication system according to an embodiment of the present invention is under control of the central instance such as exercised by the point coordination function (PCF) or the central controller (CC) described above.

With reference to Fig. 2b a principle structure of an IEEE 802.11x MAC frame is schematically illustrated for the sake of information.

### [The Invention]

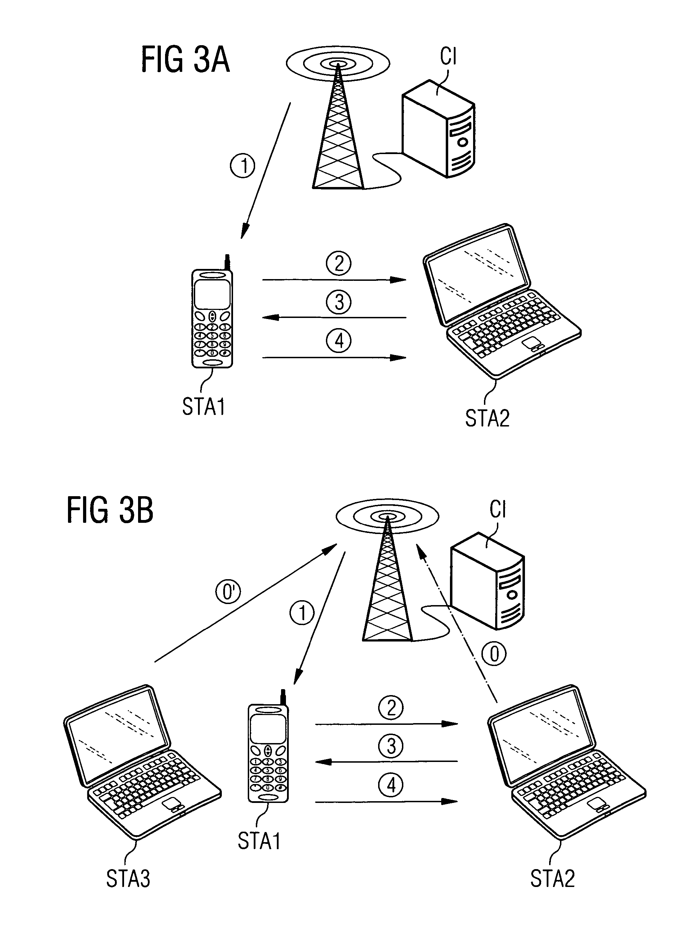

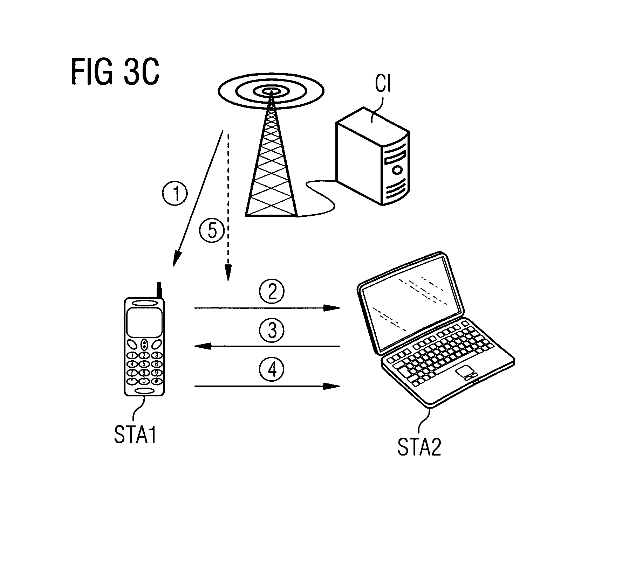

With reference to Fig. 3a, the wireless communication network according to an embodiment of the present invention comprises a central instance CI and at least two arbitrary stations STA1 and STA 2. The central instance CI of the wireless communication network may an access point (AP) or a central controller (CC) of any type described above. In general, the central instance CI may be an access point (AP), a central controller (CC), base station (BS), a NodeB or any other network entity, which exercises control over the allocation of medium resources of at least a cell (i.e. a geographical area served thereby) of the wireless communication network, which cell is managed by the central instance CI. The wireless communication network transmits signals between the stations STA1 and STA2 through the central instance CI or the stations STA1 and STA2 may communicate with each other under the control of the central instance. The wireless communication network is a packet-switched network. In other words, a macro data structure of indefinite size is not necessarily transmitted across the shared medium wireless communication network intact but rather might be transmitted in small pieces. Each of the small pieces is encapsulated into a data structure so-called data frame and each data frame traverses the shared medium wireless communication network. The intended receiving station of the macro data structure collects all pieces of data frames as they are received, recovers the small pieces of data from each, and reassembles them into the macro data structure. The wireless communication network may comprise a backbone network (not shown in Fig. 3a), especially a wired backbone network. The backbone network is also a packet-switched network transmitting macro data structures as outlined above.

As a presumption, the stations STA1 and STA 2 schematically illustrated in Fig. 3a are capable for direct communication with each other and in accordance with the protocol framework supported by the wireless communication network and used thereon for data information communication and control of communication over the shared medium of the wireless communication network. The wireless communication network schematically depicted in Fig. 3a may include further stations. In particular, the further stations may have heterogeneous capabilities. Those skilled in the art will understand from the following description that the presence of further stations having heterogeneous capabilities will not have any effect on the inventive concept.

In case the wireless communication network comprises several central instances CI, the central instance CI may be that central instance CI, which has an at least sufficient wireless link quality to at least the station STA1. This means that the station STA1 is associated to the central instance CI, which is enables to allocate wireless medium resources to the station STA1 for wireless communication within the wireless communication network.

A protocol sequence framework and set of messages for establishing a direct link between the stations STA1 and STA2 will be described in the following on the basis of several embodiments. As a constraint to the following embodiments, it should be assumed that the station STA1 is data source and the station STA2 is data destination; this means that the station STA1 holds data, which is intended for direct transmission to the station STA2.

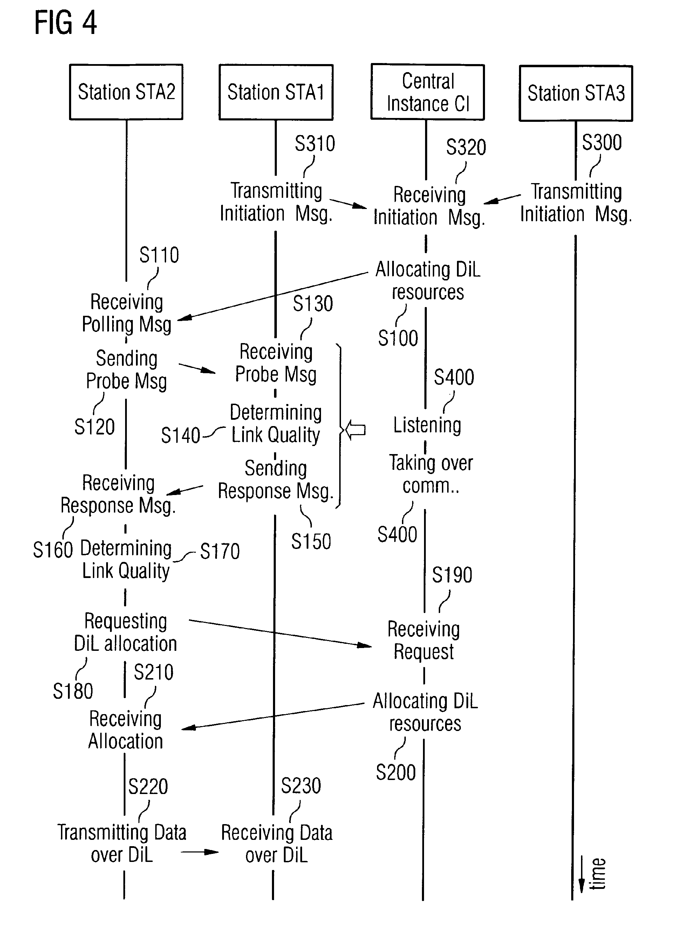

A first operation sequence according to a first embodiment of the present invention will be further described with reference to Fig. 3a and Fig. 4, which schematically illustrates a comprehensive flow diagram according to an embodiment of the present invention.

In a first step, the central instance CI allocates (operation S100) medium resources to the station STA1 for direct communication with the station STA2. The station STA1 is that station, which holds data to be communication to the station STA2. A polling message 1 (or invitation message) may be transmitted from the central instance CI and received (operation S110) by the station STA1, which indicates allocated medium resources to the station STA1, which are used for the communication between STA1 and STA2. Conventionally, when a station polled the following communication takes place between the polled station and the station that has been polled. Herein, the station STA1 polled by the central instance CI would conventionally communicate with the polling central instance CI using the medium resources indicated in the polling message.

In a next step, a probe message 2 is sent (operation S120) from the station STA1 to the station STA2. The probe message 2 is transmitted over a direct communication ink using medium resources allocated by the central instance CI. The station STA2 is the station, to which the data available at the station STA1 is intended to be communicated via a direct communication link.

In a following step, the probe message 2 sent (operation S120) by the station STA1 is received at the station STA2. Upon successful reception of the probe message at the station STA2, the station STA2 responses to the probe message. A response message 2 is sent back (operation S150) by the responding station STA2 to the probing station STA1.

In a next following step, the response message 2 is received by the probing station STA1 from the responding station STA2.

The message handshake comprising the probe message 2 and the response message 3 enables the station STA2, which receives the probe message 2, and/or station STA1, which receives the response message 3, participating in the message handshake to determine (operations S140 and S170) link quality and link qualities of the direct communication link between them, respectively. In general, the link quality of the wireless direct communication link is previously unknown. There exist many approaches for estimating the link quality / channel conditions between the central instance CI and stations of wireless communication systems, which information about the link quality / channel conditions are used for agreeing on appropriate communication parameters of a communication link (including for instance modulation scheme, coding scheme, error correction mechanisms, and the like). Typically, a plurality of sets of communication parameters is available. The information about the link quality / channel conditions is assessed and an appropriate set of communication parameters is selected in accordance with the assessment result, which promise a data transmission rate over the communication link, which meets the quality of service (QoS) requirements, which are typically defined by the application(s) making use of the data transmitted over the communication link. The respective link qualities between central instance and stations are hence known to the central instance and stations. But, a determination of the link quality / channel conditions of the direct communication link between the stations STA1 and STA2 cannot be obtained or derived from these known link qualities. Structures located in-between the path connecting the stations STA1 and STA2 may disadvantageously degrade the direct link signal propagation. However such inter-located structures do not have any effect on the signal propagation between stations STA1, STA2 and central instance CI.

The probe message is provided to enable the station STA2 to determine a link quality for signals sent by the station STA1 to the station STA2. The link quality determined or measured by the station STA on the basis of the probe message 2 can be included in the response message 3 sent back to the station STA1. The station STA1 receives from the response message 3 information about the link quality / channel conditions of direct communication link in direction to the station STA2, i.e. the uplink direction.

The response message may also be configured to enable the station STA1 to determine a link quality for signals sent by the station STA2 to the station STA1.

A quality in terms of power level such as received signal strength or terms of interference such as signal-to-noise level or interference level measured at the physical layer of the station STA2 and station STA1 may be applied to determine the link quality / channel conditions, respectively. The link quality / channel conditions information obtained from such lower layer measurement allow to estimate link quality /channel conditions in future transmission over the communication link measure. It should be noted that the uplink and downlink quality / conditions information may differ. At least the station STA1 holding data to be transmitted obtains link quality information of the direct communication link for signals sent by the station STA1 to the station STA2. The best suited coding and modulation schemes can be selected on the basis of the measured link quality information and future estimated link quality information. The probe and/or the response messages may have a predetermined content and are transmitted at a predetermined transmission power level to enable quality measurements.

Moreover, the message handshake comprising the probe message 2 and the response message 3 may further enable to determine parameters of the channel transfer function. Parameters of the channel transfer function may be required for an efficient operation of multiple-input-multiple-output (MIMO) multiple antenna.

Upon a successful handshake between the station STA1 and STA2 and determination of the link quality, the direct communication link for transmitting the data held at the station STA1 can be performed. The establishment of the direct communication link for transmitting the data held at the station STA1 may be performed in accordance with the protocol framework of the wireless communication network.

The establishment of the direct link between the stations STA1 and STA2 may for instance include a requesting (operation S180) of medium resource allocation at the central instance CI for the direct link to the station STA2. The central instance CI receives (operation S190) the request for medium resource allocation and allocates the medium resources (operations S200 and S210) to the station STA1 for the direct link.

The station STA1 established accordingly the direct link and sends (operations S220 and 230) the held data 4 to the station STA2 using the allocated medium resources.

The availability of a direct link between the stations STA1 and STA2 removes the necessity of relaying data communication via the central instance, which would be the conventional way, when the communication of the data is required for instance to be transmitted within a defined interval, at a defined transmission rate, or in general at a defined quality of service (QoS). For instance, in direct mode of HiperLAN/2, the central controller (CC) or access point (AP) provides for the possibility for allocating medium resources for direct link communication between stations but there is not defined any framework in the standard, which would allow for link quality determination of the stations participating in the direct link. In IEEE 802.11x WLAN, distributed coordination function (DCF) is a collision detection scheme, which is principle does not allow for defined quality of service (QoS) in data communication. Point coordination function (PCF) allows for allocation of medium resources to be used in a direct communication link. However, there is also not defined any mechanism for determining the link quality of the direct communication link.

Different devices may initiate establishment of the direct communication link according to an embodiment of the present invention. With reference to Fig. 3b, a selection of example initiation cases according to an embodiment of the present invention is schematically illustrated. As aforementioned, the control instance may imitate establishment of the direct communication link. A polling message generated at the central instance and transmitted to the station STA1, which may also be designates in this context as direct link originating station STA1, direct link source station or direct link establishing station, initiates the establishment of the direct communication link to the station STA2, which may be designate in this context as direct link terminating station STA2 or direct link destination (target) station.

Alternatively, the station STA1, i.e. the direct link originating station STA1, may itself initiate the establishment of the direct communication link to the station STA2, i.e. the direct link target station. For message handshaking and/or direct link data communication, the direct link originating station STA1 may requests for allocation of medium resources at the control instance CI. It should be understood that the message handshaking has not necessarily to be performed at a communication link using medium resources are allocated by the central instance CI. Whereas the data to be exchanged between the station STA1 and STA2 should be transmitted over a direct communication link using medium resources are allocated by the central instance CI in particular for meeting quality of service (QoS) requirements thereof, the message handshaking serves for preparing the following data communication including informing the direct link target station STA2 about the intent and establishment of direct link data communication and measuring link properties such as in particular link quality.

In a further alternative, the station STA2, i.e. the direct link target station STA2, may initiate the establishment of the direct communication link originating from the direct link originating station STA1 and terminated at it, i.e. the station STA2 is the direct link target station of the direct communication link. In this case, the station STA2 sends (operation S310) a request 0 to the central instance CI, instructing (operation S320) the central instance to transmit a polling message such as the aforementioned polling message 1 to the direct link originating station STA1. The station STA2 has to be assigned to the central instance CI. Otherwise, the station STA2 would not be allowed to communicate with the central instance CI.

In yet a further alternative, any third device such as a third station STA3 may initiate (operation S200) the establishment of the direct communication link between stations STA1 and STA2. The third device may be any station STA3 assigned to the central instance CI. In analogy to the station STA2 initiating the direct communication link, the third station STA3 sends (operation S300) a request 0' to the central instance CI, instructing (operation S320) the central instance CI to transmit a polling message such as the aforementioned polling message 1 to the direct link originating station STA1. The third device may be any processing device outside the wireless communication network or any station located at a different cell served by another central instance. A processing device outside the wireless communication network may be connected through a backbone network to the wireless communication network. In particular, the wireless communication network comprises an access point, which enables communication of the processing device to the central instance CI. More particularly, the central instance CI may be an access point interconnecting between the wireless communication network and the backbone network.

The control instance CI may regularly update address mapping table of all stations assigned to the control instance CI. The address mapping table comprises local identifiers of the stations, which can be represented as local MAC addresses at least unique in the cell served by the control instance CI. Any station, which wants to be assigned to the control instance CI because for instance the control instance CI is expected to offer an appropriate link quality for data communication relayed via the control instance CI or the station simply moves into the cell served by the control instance CI, performs an association procedure. The association procedure may for instance include registration of the station at the central instance CI and assignment of local identifiers required in accordance with the communication protocol framework of the wireless communication network.

Hence, a further issue of establishing direct communication links becomes apparent. The station STA1, i.e. the direct link originating station STA1, sends the probe message 2 to the station STA2, i.e. the direct link target station STA2. The direct link target station STA2 has to be able to detect that the probe message 2 sent out by station STA1 is intended for it. Typically, the local identifiers are used at lower layers, i.e. the media access control (MAC) layer and physical (PHY) layer.

The addressing of the direct link target station STA2 will not be any problem, when the station STA1 knows the local identifiers of the direct link target station STA2 anyway or due to earlier identifier discovery procedure. In case the central instance CI polls the station STA1 (either the central instance CI, the direct link target station STA2 or any third device/station STA) the central instance CI may include any address information required by the direct link originating station STA1 into the polling message 1. The initiating station/device may include any upper layer address information such as an IP (Internet protocol) address into the request t to the central instance CI and instructing the central instance CI to poll the station STA1. The central instance CI may retrieves the address information required at the station STA1 such as local identifiers in accordance with the address information included in the request sent by the initiating station/device.

Alternatively, the initiating station/device may include the required address information into the request sent to the central instance CI and instructing the central instance CI to poll the station STA1. The central instance CI extracts the address information from the request of the initiating station/device and includes the extracted address information into the polling message 1.

In another alternative, the direct link originating station STA1 may send the probe message 2 as a broadcast message. The broadcast message may received by any station within the transmission range of the station STA1. The stations which have received the probe message 2 parse the probe message for any identifier identifying the direct link target station STA2, to which the probe message 2 is originally intended and to which the direct communication link is intended to be established. The identifier may be any upper layer identifier such as an IP (internet protocol) address.

The direct link target station STA2 will not be subjected to any problem in addressing the response message 3. The direct link target station STA2 can obtain the required address information from the

With reference to Fig. e3 a listening central instance CI according to an embodiment of the present invention is schematically illustrated. The central instance CI can listen to the probe-response message handshaking between the stations STA1 and STA2. In particular, the central instance CI may listen to the response message sending of the station STA2 to the station STA1. The listen enables the central instance to at least determine the link quality / channel conditions on a path between central instance CI and station STA2. This information may be used for potential future communications among them.

In addition, if the reception of the probe message 2 is acknowledged by an ACK message, the station STA1 as well as the listening central instance CI is informed about the reception status at the direct link target station STA2. In case of a transmission failure for instance because of signal sever attenuation, the central instance may assign further medium resources to the direct link originating station STA1 to initiate a re-transmission without the necessity of the direct link originating station STA1, direct link source station STA1, to send a resource request for that purpose.

In a further variation, the central instance CI may take over the communication in that the data to be communicated between the stations STA1 and STA2 is relayed via the central instance CI. A take over may be performed in case the direct link target station STA2 does not acknowledge the reception of the probe message assuming that direct communication link has to be expected not being operational. The central instance CI may poll the direct link originating station STA1 instructing the direct link originating station STA1 that the data should be sent via the central instance CI relaying the data communication between station STA1 and station STA2.

It should be noted that the deployment of the core concept of the present invention with IEEE 802.11x-based wireless communication networks can be realized. A polling mode is already defined in the standard. However, this polling mode is intended for communication between station and access point. In order to support direct communication according to an embodiment of the present invention, a flag may be added in the header of the polling message, which indicates the allowance for direct communication link. In case the polled station holds data intended for any other station within the area of an access point, the target station will be addressed in the probe message. The probe message may be a RTS message or an adopted or a modified RTS message, which the probed station responses with a CTS message or an adopted or a modified CTS message. Hence, the standardized message packets may be reused for the direct communication link establishment resulting in a combination of messages as used for point coordination function (PCF) mode and distributed coordination function (DCF) modes. This means that the RTS/CTS message handshaking is used in combination with the polling function of the access point (AP). At the same time, the hidden-station problem for the direct communication link is overcome.

The station may be in principle any computing device comprising a wireless interface module 110, which can wirelessly communicate with any counterpart conventional computing device comprising a corresponding wireless interface module 110. The station interacts with the wireless system through wireless module 110. The wireless module 110 sends data received from the station and passes on received data to the station.

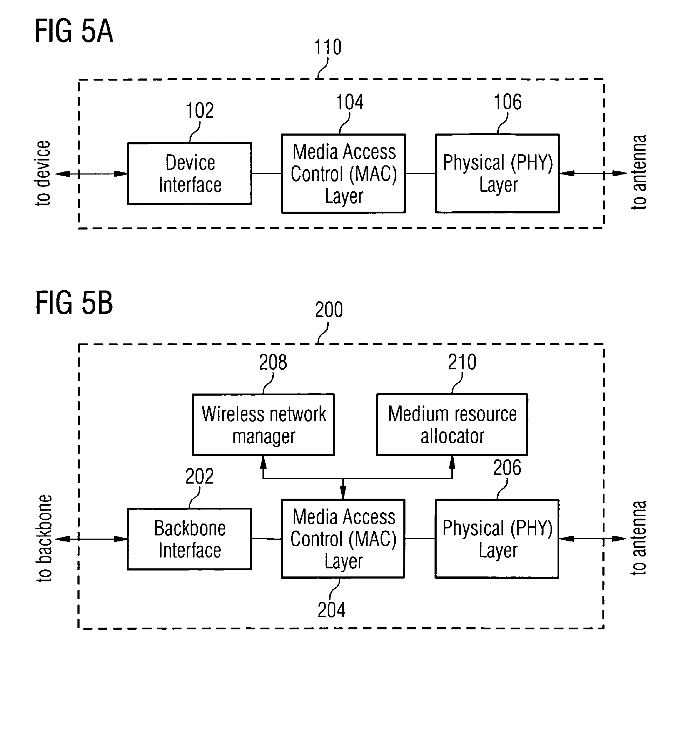

Fig. 5a is a schematic block diagram of wireless module 110, constructed and operative in accordance with an embodiment of the present invention. It is well understood by those skilled in the art that the elements of Fig. 5a may be implemented as structures in hardware, firmware, or as software instructions and data encoded on a computer-readable storage medium.

The wireless module 110 comprises device interface 102, media access control layer (MAC) 104 and physical layer (PHY) 106. In some embodiments, wireless module 110 may also include an antenna (not shown).The device interface 102 is any interface, as is known in the art, which allows wireless module 110 to interface with station. In some embodiments, device interface 102 may emulate a standard communications protocol so that station such that the station does not realize that it is communicating with another station. The media access control layer 104 is any structure that governs access to the wireless transmission media. As shown in Fig. 5a, media access control layer 104 is coupled to device interface 102 and physical layer 106, enabling device interface 102 to exchange data with the physical layer 106. The physical (PHY) layer 106 is any structure that provides the procedures involved in transferring a single bit over the wireless medium being used by the wireless module 110.

Fig. 5b is a schematic block diagram of central instance CI 200, constructed and operative in accordance with an embodiment of the present invention. It is well understood by those skilled in the art that the elements of Fig. 5b may be implemented as structures in hardware, firmware, or as software instructions and data encoded on a computer-readable storage medium.

The central instance 200 comprises media access control layer (MAC) 204 and physical layer (PHY) 206, and management structure required for exercising control over the wireless communication network medium resource. Herein, the management structure comprises exemplarily a medium resource allocator 210 and a wireless network manager 208. The central instance 200 is connected to an antenna may also include an antenna (not shown).The device interface 102 is any interface, as is known in the art, which allows the central instance 200 to interface with the stations of the wireless communication network. In some embodiments, the central instance 200 may comprise a backbone interface 220 enabling the central instance for interfacing communications of the stations over the wireless communication network to the backbone network infrastructure.

The media access control layer 204 is any structure that governs access to the wireless transmission media. As shown in Fig. 5b, media access control layer 204 is coupled to the management structure and physical layer 206, enabling control instance 200 to exchange data with the physical layer 206. The physical (PHY) layer 206 is any structure that provides the procedures involved in transferring a single bit over the wireless medium being used by the central instance 200.

The management structure and in particular the wireless network manager 208 is configured to store, maintain and manage among other information relating to the stations of the wireless communication network assigned to the central instance. The information comprises for instance information relating to addressing in the wireless communication network such as local identifiers, information relating to the link conditions in the wireless communication network such as signal strengths, signal-to-noise ratios, and interference levels. Information about each new station registering at the control instance CI is stored and managed by the wireless network manager 208. Each station which cancels registration or which is canceled because of sever interferences, signal attenuation etc., is removed therefrom.

The medium resource allocator 210 exercises the control over the medium resources of the wireless communication network and includes a scheduler, which is responsible to allocate the medium resources to a station, which has asked for. An allocation queue including the stations to which right to communicate is intended to be allocated has assigned a priority, queues the allocation target stations.

From the forgoing description, it will be apparent that modifications can e made to the system without departing from the teaching of the present invention. Accordingly, the scope of the invention is only to be limited as necessarily by the accompanying claims.

## Claims

1. Method, comprising:
sending a probe message (2) from a first station (STA1) to a second, remote station (STA2), wherein the probe message (2) is sent over a direct communication link (DiL) making use of network medium resources allocated by a central instance (CI), wherein the central instance (CI) exercises control over shared communication medium resources of a wireless local area network, wherein at least the first station is assigned to the central instance (CI);
receiving the response message (3) at the first station (STA1) in response to the probe message (2), wherein the response message (3) includes link quality information, wherein the link quality information is determined at the second, remote station (STA2) on the basis of physical layer measurements at the probe message (2);
establishing a direct communication link (DiL) between the first station (STA1) and the second, remote station (STA2), wherein the direct communication link (DiL) makes use of network medium resources allocated by the central instance (CI) and wherein communication parameters of the direct communication link (DiL) are selected in accordance with the link quality information; and
transmitting data from the first station (STA1) to the second, remote station (STA2) through the direct communication link (DiL).

2. Method according to claim 1, wherein the procedure of establishing the direct communication link is cancelled in case the link quality information is not satisfactory, the method further comprising:
sending the data to be transmitted to the second, remote station (STA2) to the central instance (CI), through which the data is relayed and passed on to the second, remote station (STA2).

3. Method according to claim 1, further comprising:
receiving a polling message (1) from the central instance (CI), wherein the polling message (1) includes allocation information for the direct communication link, through which the probe message (2) is sent to the second, remote station (STA2).

4. Method according to claim 1, further comprising:
receiving at the first station (STA1) a polling message (5) from the central instance (CI) indicating a taking over of the data communication task of the first station (STA1) in that the data to be transmitted to the second, remote station (STA2) is relayed through the central instance (CI) and passed on to the second, remote station (STA2), wherein the central instance (CI) listens on the communication between first and second, remote stations (STA1, STA2).

5. Method, further comprising:
sending a probe message (2) from a first station (STA1) to a second, remote station (STA2), wherein the probe message (2) is sent over a direct communication link (DiL) making use of network medium resources allocated by a central instance (CI), wherein the central instance (CI) exercises control over shared communication medium resources of a wireless local area network, wherein at least the first station is assigned to the central instance (CI);
receiving the probe message (2) at the second, remote station (STA2);
determining link quality information at the second, remote station (STA2) on the basis of physical layer measurements at the probe message (2);
sending a response message (3) from the second, remote station (STA2) to the first station (STA1) in response to the reception of the probe message, wherein the response message (3) includes the link quality information;
receiving the response message (3) at the first station (STA1);
establishing a direct communication link (DiL) between the first station (STA1) and the second, remote station (STA2), wherein the direct communication link (DiL) makes use of network medium resources allocated by the central instance (CI) and wherein communication parameters of the direct communication link (DiL) are selected in accordance with the link quality information; and
transmitting data from the first station (STA1) to the second, remote station (STA2) through the direct communication link (DiL).

6. Method according to claim 6, wherein the procedure of establishing the direct communication link is cancelled in case the link quality is not satisfactory, the method further comprising:
sending the data to be transmitted to the second, remote station (STA2) to the central instance (CI), through which the data is relayed and passed on to the second, remote station (STA2).

7. Method according to claim 6, further comprising;
receiving a polling message (1) from the central instance (CI), wherein the polling message (1) includes allocation information for the direct communication link, through which the probe message (2) is sent to the second, remote station (STA2).

8. Method according to claim 6, further comprising:
listening of the central instance (CI) on the communication between first and second, remote stations (STA1, STA2); and
receiving at the first station (STA1) a polling message (5) from the central instance (CI) indicating a taking over of the data communication task of the first station (STA1) in that the data to be transmitted to the second, remote station (STA2) is relayed through the central instance (CI) and passed on to the second, remote station (STA2).

9. Computer program product comprising program code sections stored on a computer-readable medium for carrying out the method of claim 1 or claim 5, when the program code sections are run on a processing device.

10. Computer program product comprising program code sections for carrying out the method of claim 1 or claim 5, when the program code sections are run on a processing device.

11. Station, comprising:
a wireless communication network interface adapted to send a probe message (2) from the station (STA1) to a second, remote station (STA2), wherein the probe message (2) is sent over a direct communication link (DiL) making use of network medium resources allocated by a central instance (CI), wherein the central instance (CI) exercises control over shared communication medium resources of a wireless local area network, wherein at least the station is assigned to the central instance (CI);
the wireless communication network interface adapted to receive a response message (3) at the station (STA1) in response to the probe message (2), wherein the response message (3) includes the link quality information, wherein the link quality information is determined at the second, remote station (STA2) on the basis of physical layer measurements at the probe message (2);
the wireless communication network interface adapted to establish a direct communication link (DiL) between the station (STA1) and the second, remote station (STA2), wherein the direct communication link (DiL) makes use of network medium resources allocated by the central instance (CI) and wherein communication parameters of the direct communication link (DiL) are selected in accordance with the link quality; and
wireless communication network interface adapted to transmitting data from the station (STA1) to the second, remote station (STA2) through the direct communication link (DiL).

12. System, comprising:
one or more stations (STAs) including at least a first station (STA1); and
a central instance (CI), which exercises control over shared communication medium resources of a wireless local area network, wherein at least the first station is assigned to the central instance (CI);
wherein the first station (STA1) comprises:
a wireless communication network interface adapted to send a probe message (2) from to a second, remote station (STA2), wherein the probe message (2) is sent over a direct communication link (DiL) making use of network medium resources allocated by the central instance (CI);
the wireless communication network interface adapted to receive the response message (3) at the first station (STA1) in response to the probe message (2), wherein the response message (3) includes link quality information;
wireless communication network interface adapted to establish a direct communication link (DiL) between the first station (STA1) and the second, remote station (STA2), wherein the direct communication link (DiL) makes use of network medium resources allocated by the central instance (CI) and wherein communication parameters of the direct communication link (DiL) are selected in accordance with the link quality information; and
wherein the second, remote station (STA2) comprises:
a wireless communication network interface adapted to receive the probe message (2);
a physical (PHY) layer component adapted to determine the link quality information on the basis of physical layer measurements at the probe message (2); and
the wireless communication network interface adapted to send the response message (3) to the first station (STA1).
